# EUROPÄISCHE PATENTSCHRIFT

(11) **EP 0 632 635 B1**
(45) Veröffentlichungstag und Bekanntmachung des Hinweises auf die Patenterteilung: **21.11.2001**
(21) Anmeldenummer: 94108121.8
(22) Anmeldetag: 26.05.1994
(51) Int. Cl.: H04M 11/04

(54) **Notruf-System**
Emergency call system
Système d'appel de secours

(30) Priorität: 03.06.1993 DE 4318441
(43) Veröffentlichungstag der Anmeldung: 04.01.1995
(73) Patentinhaber: ALCATEL, 75008 Paris (FR)
(72) Erfinder: Wizgall, Manfred, D-70191 Stuttgart (DE); Kuttner, Axel, D-70469 Stuttgart (DE); Ohnsorge, Horst, D-71691 Freiberg (DE)
(74) Vertreter: Knecht, Ulrich Karl, Dipl.-Ing.

(56) Entgegenhaltungen:
- EP-A- 0 417 944
- DE-A- 3 410 619
- DE-A- 4 220 963
- FR-A- 2 680 258

## Beschreibung

Es sind Notruf-Systeme bekannt, in denen mittels drahtlosen oder drahtgebundenen Notruf-Sendevorrichtungen Notrufe abgesetzt werden können.

Aus DE 34 10 619 A1 ist ein öffentliches Telefonnetz bekannt, in dem Textnachrichten übertragen werden, so daß sprachbehinderte Menschen u.a. auch im Notfall Hilfe anfordern können. Dazu ist jede öffentliche Fernsprechstation mit einer Textkartenleseeinrichtung ausgestattet, die Adressdaten und Textdaten von einer tragbaren Textkarte liest, die man im Notfall in die Textkartenleseeinrichtung einschiebt. Die öffentliche Fernsprechstation verfügt über automatische Wählvorrichtungen, die anhand der Adressdaten eine bestimmte Empfangsstation anwählt und an diese die Textdaten sendet. Die Empfangsstation ist eine textfähige Teilnehmerstation mit einem Anzeigefeld (Display), auf dem der übertragene Text erscheint, damit er von der Empfangsperson gelesen werden kann. Die Empfangsstation hat auch einen Speicher, in den der Text eingegeben wird, so daß er wiederholt gelesen werden kann. Außerdem ist an die Empfangsstation ein Miniaturdrucker angeschaltet, der den übertragenen Text, z.B. bei nicht besetzter Empfangsstation, ausdruckt. Zusätzlich zum Text kann auch die Adresse der Sendevorrichtung (öffentliche Fernsprechstation) übertragen werden, so daß die Empfangsperson bei einem Notruf oder einem Abholwunsch den Standort feststellen kann. Bei diesem bekannten Notruf-System muß die Empfangsperson die übertragene Nachricht (Tex) auswerten und die gewünschten oder erforderlichen Maßnahmen einleiten. Wünschenswert wäre ein Notruf-System, das technische Mittel enthält, die diese Schritte automatisch, einfach und schnell ausführen.

Aus DE 41 30 647 A1 ist ein Notruf-System bekannt, bei dem von einem tragbaren Funksender ein Notrufsignal an eine Basisstation eines schnurlosen Telefons gesendet wird. Das Notrufsignal enthält einen Notrufkode, der im Empfänger der Basistation dekodiert wird. Dieser Notrufkode gibt eine Rufnummer an, die in der Basisstation gespeichert ist. Eine Telefon-Wähleinrichtung innerhalb der Basisstation steuert einen Wählvorgang für eine Telefonverbindung mit einem unter dieser Rufnummer erreichbaren Teilnehmer . Diesem wird (z.B. über automatische Sprachansage) nur mitgeteilt, daß ein Notfall vorliegt.

Aus "Patents Abstracts of Japan, JP 2-22 69 51 A, E-1006, Nov. 27, 1990, Vol. 14, Nr. 537" ist ein drahtgebundenes Notruf-System mit ISDN-Terminals bekannt, die Chipkartenleser enthalten. Durch Einschieben einer Chipkarte, auf der Notrufinformation gespeichert ist, wird eine Verbindung zu einer Notrufzentrale (z.B. Polizei, Feuerwehr, Hospital) aufgebaut. Danach werden die Notrufinformation und die Kennung des ISDN-Terminals (user-user information) in einem Editor miteinander verbunden und an die Notrufzentrale gesendet.

Ein weiteres Notruf-System ist z.B. in dem Artikel "Notruftelefon", von A. Kailling, Unterrichtsblätter der Deutschen Bundespost, S. 3-14, Ausg. 1, Jg. 35/1982 beschrieben. Dort wird das sogenannte Notrufsystem 73 beschrieben, in dem Notrufe über das öffentliche Fernsprechnetz der Deutschen Bundespost übermittelt werden. Dieses Notruf-System ist für den Personen- und Güterschutz innerhalb eines begrenzten Schutzgebietes ausgelegt und erlaubt nur das ortsgebundene Absetzen eines Notrufs. Das Notrufsystem ist innerhalb der Ortsnetze eingerichtet, um im Notfall die Polizei oder die Feuerwehr anfordern zu können. Es ist auch als Notrufsäulensystem für Autobahnen realisiert. Die Notrufe werden an eine sogenannte Notrufabfragestelle vermittelt, die Hilfsmaßnahmen einleitet und koordiniert. Dem Notruf selbst, d.h. dem Auslösen eines Alarms, kann die fernmündliche Übertragung einer Notfallmeldung folgen, um gezielte Hilfsmaßnahmen einleiten zu können.

Es sind weiterhin Notruf-Systeme bekannt, in denen über Funk, d.h. ortsungebunden, Notrufe abgesetzt werden können. Ein derartiges Notruf-System wird z.B. in dem Artikel "Autonotfunk, ein Funknotmeldesystem für Verkehrsteilnehmer" von A. Simianer, NTG-Fachberichte "Bewegliche Funkdienste", Band 61, S. 148 - 152, VDE-Verlag Berlin, 1977, beschrieben. Dieses sogenannte "Autonotfunk-System" enthält drahtlose Notruf-Sendevorrichtungen, die in Kraftfahrzeuge eingebaut werden. Es ist möglich ein Notruftelegramm abzusetzen, das "die Kennung des Fahrzeuges (Nummer des KFZ-Briefes) und die Art der Notlage (Notfall, Panne)" enthält, als auch ein "gesteuertes Gegensprechen" mit der Notrufzentrale (Rettungsleitstelle) durchzuführen. Das Kraftfahrzeug kann mittels Funkpeilung geortet werden.

Weiterhin sind Funksysteme bekannt, in denen die Funkgeräte und Funkstationen für einen Notrufdienst technisch ausgestattet sind. Derartige Funksysteme sind z.B. das zellulare Mobilfunksystem "GSM" (Global System for Mobile Communications) und das Bündelfunksystem "Chekker", wie sie in dem Buch "Mobilfunk" von J. Kedaj und G. Hentschel, 1. Ausg., Kap. 4 - 6, Verlag Neue Mediengesellschaft, Ulm, 1991, beschrieben werden. In beiden Funksystemen dient jeweils das Funkgerät des Teilnehmers auch als Notruf-Funkvorrichtung. Diese löst über den Organisationskanal einen Alarm aus und erzwingt eine anschließende Zuteilung eines Sprachkanals, über den eine Notfallmeldung zur Alarmzentrale abgesetzt werden kann.

Die bekannten Notruf-Systeme sind auf ein bestimmtes Schutzgebiet (Autobahnen, Gebäude, Funkgebiet ...) und auf bestimmte Personalkreise (Autofahrer, Mobilfunkteilnehmer ...) zugeschnitten.

Mittels der bekannten Notruf-Systeme, müssen Angaben zu den vom Notfall betroffenen Personen der Alarmzentrale mündlich mitgeteilt werden. Dies ist nicht in jedem Notfall möglich, insbesondere dann nicht, wenn Helfer vor Ort fehlen und die betroffene Person schwer verletzt ist. Auch Personen mit Sprachproblemen (z.B. Ausländer oder Sprachbehinderte) können diese herkömmlichen Notruf-Systeme nicht in vollem Umfang nutzen.

Aufgabe der Erfindung ist es ein Notruf-System zu entwerfen, das jedermann ermöglicht, einfach und schnell einen Notruf mit einer Notfallmeldung zu senden und gezielt Hilfe anzufordern.

Gelöst wird die Aufgabe durch ein Notruf-System mit den Merkmalen nach Anspruch 1.

Weiterhin soll eine Sendevorrichtung für ein solches Notruf-System entworfen werden.

Diese Aufgabe wird gelöst durch eine Sendevorrichtung mit den Merkmalen nach Anspruch 3.

Vorteilhafte Weiterbildungen der Erfindung sind den Unteransprüchen zu entnehmen.

Demnach ist es besonders vorteilhaft, das Notruf-System in bereits vorhandenen drahtgebundenen Übertragungsnetzen, wie z.B. dem Fernsprechnetz und dem Straßenbeleuchtungsnetz, einzurichten. Durch die Nutzung dieser weitverzweigten Infrastruktur kann das Notruf-System kostengünstig auf- und ausgebaut werden.

Weiterhin ist es besonders vorteilhaft,das Notruf-System so auszugestalten, daß es bestehende Betriebs- oder Mobilfunknetze nutzt. Mittels der drahtlosen Notruf-Sendevorrichtung, die ein Notruftelegramm auf einem entsprechenden Betriebs- bzw. Mobilfunkkanal sendet, kann im ganzen Funkgebiet jederzeit Hilfe angefordert werden.

Ein weiterer besonderer Vorteil ist es, die Notruf-Sendevorrichtung mit einem solchen Kartenleser auszustatten, der eine sogenannte Patienten-Chip-Karte lesen kann. Dadurch können wichtige medizinische Patientendaten gelesen und in das Notruftelegramm integriert werden.

Es folgt nun die Beschreibung von zwei erfindungsgemäßen Ausführungsbeispielen unter Zuhilfenahme von vier Figuren.
- Fig. 1: zeigt schematisch den Aufbau eines Notruf-Systems, in dem über ein Mobilfunknetz, ein Fernsprechnetz und ein Straßenbeleuchtungsnetz Notrufe abgesetzt werden können,
- Fig. 2a: zeigt ein Blockschaltbild einer drahtlosen Notruf-Sendevorrichtung mit einem Chipkartenleser,
- Fig. 2b: zeigt schematisch die Integration dieser Notruf-Sendevorrichtung in ein tragbares Gehäuse;
- Fig. 3: zeigt ein Blockschaltbild einer drahtlosen Notruf-Sendevorrichtung zum Senden eines Notruf-Telegramms, das die Alarmkategorie und die Standortposition angibt.

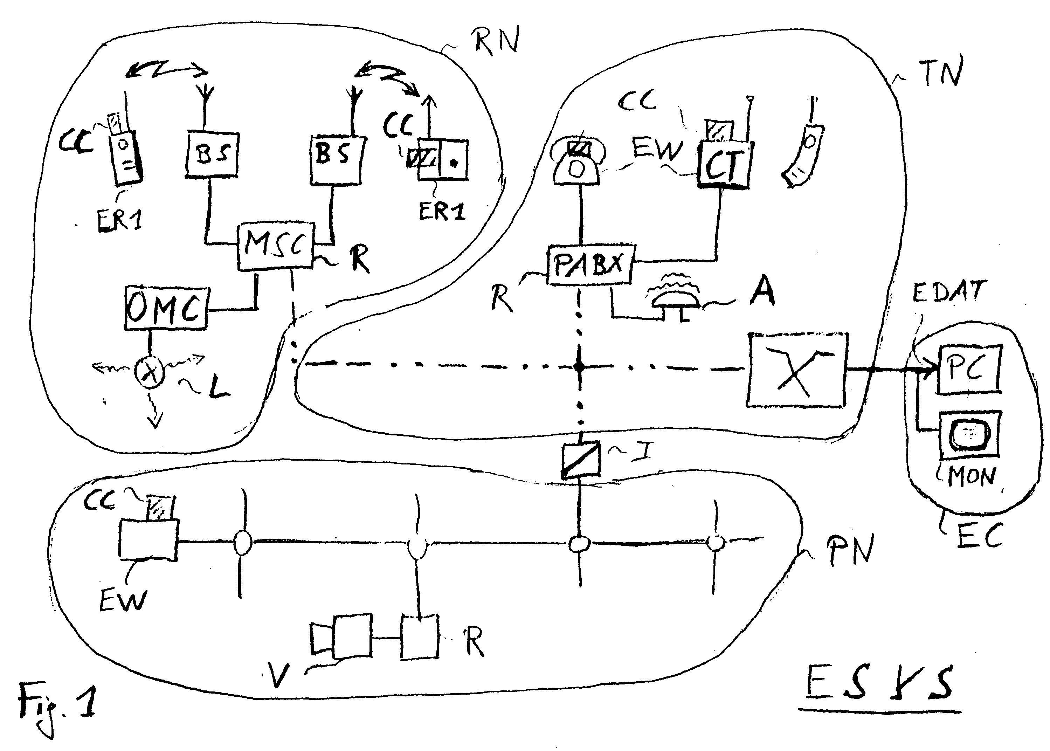

Das in Fig. 1 dargestellte Notruf-System ESYS umfaßt ein Übertragungsnetz, das aus einem Mobilfunknetz RN, einem damit verbundenen Fernsprechnetz TN und einem damit über einen NF-Übertrager I verbundenen Energieversorgungsnetz PN aufgebaut ist. An das Fernsprechnetz TN ist eine Alarmzentrale EC angeschlossen, die einen Rechner PC und einen Überwachungsmonitor MON enthält. Das Notruf-System ESYS umfaßt drahtgebundene Notruf-Sendevorrichtungen EW, die an das Fernsprechnetz TN oder an das Energieversorgungsnetz PN angeschlossen sind. Weiterhin enthält das Notruf-System drahtlose Notruf-Sendevorrichtungen ER1, die an das Mobilfunknetz RN angeschlossen sind. Die Notruf-Sendevorrichtungen EW und ER1 enthalten jeweils einen Kartenleser, der zu sendende Notrufdaten EDAT von einer Speicher-Karte CC liest.

Das Notruf-System ESYS enthält drei Notruf-Empfangsvorrichtungen R, die eine Alarmfunktion, wie z.B. ein Lichtsignal L, ein akustisches Signal A oder eine Videoüberwachung V auslösen, falls ein Notruftelegramm EMES empfangen wird, das eine entsprechende Kennung enthält. Eine der Notruf-Empfangsvorrichtungen R ist in einer Funk-Vermittlungsstelle MSC des Mobilfunknetzes RN, eine andere ist in einer Nebenstellenanlage des Fernsprechnetzes TN realisiert. Diese Notruf-Empfangsvorrichtungen leiten Notrufdaten EDAT des Notruftelegramms EMES dann an die Alarmzentrale EC weiter, falls die Kennung z.B. eine medizinische Hilfsanforderung anzeigt.

Die Funktionsweise der Notruf-Sendevorrichtungen EW und ER1 sowie der Notruf-Empfangsvorrichtungen R wird im späteren genauer erläutert.

Zunächst werden die drei obig genannten Netze TN, PN und RN beschrieben, die das Übertragungsnetz des Notruf-Systems ESYS bilden.

Das Mobilfunknetz RN ist beispielsweise nach dem GSM-Standard ausgelegt. Es enthält mehrere Funkfeststationen BS, eine damit verbundene Funkvermittlungsstelle MSC und eine daran angeschlossene Betriebs- und Wartungszentrale OMC.

Eine Person, die sich im Funkfeldbereich einer der Funkfeststationen BS befindet, kann mittels der drahtlosen Notruf-Sendevorrichtung ER1, nachfolgend kurz Notruf-Funkvorrichtung genannt, jederzeit einen Notruf drahtlos absetzen. Die Notruf-Funkvorrichtung kann z.B. als kompaktes Datenfunkgerät ausgeführt werden. Die Integration der Notruf-Funkvorrichtung in ein Mobilfunkgerät (mobile station, hand held) oder in ein stationäres Funktelefon (fixed wireless telephone) ist ebenfalls möglich. Die Notruf-Funkvorrichtung ER1 liest mittels ihrem Kartenleser die Notrufdaten von der Speicher-Karte CC, die der Benutzer zuvor eingesteckt hat. Diese Speicher-Karte CC ist z.B. die sogenannte Patienten-Chip-Karte des Benutzers oder die einer anderen Person, die Hilfe benötigt.

Im Notfall werden die Notrufdaten, die personenbezogene und medizinische Daten enthalten, mehrfach in einem Notruftelegramm EMES auf einem Mobilfunkkanal ausgesendet. Empfangsseitig wird das Notruftelegramm zu der Funkvermittlungsstelle MSC signalisiert, die hier mit einer der Notruf-Empfangsvorrichtungen R ausgestattet ist. Innerhalb dieser Notruf-Empfangsvorrichtung wird das Notruftelegramm EMES mittels Decodier- und Dechiffrierstufen ausgewertet, um solche Alarmfunktionen auszulösen, die der gemeldete Notfall erfordert.

In diesem Beispiel wird ein Notruf abgesendet, der einen Kfz-Unfall anzeigt. Das Senden des Notrufs kann etwa durch einen Beschleunigungsmesser (crash sensor) im Fahrzeug ausgelöst werden. Die grobe Position des Unfallortes wird durch den Funkfeldbereich, d.h. durch die Kennung der entsprechenden Funkfeststationen, bestimmt. Die Notruf-Empfangsvorrichtung R löst einen optischen Alarm L in der Betriebs- und Wartungszentrale OMC aus und sendet die Notrufdaten EDAT, über das mit der Funkvermittlungsstelle MSC verbundene Fernsprechnetz, an die Alarmzentrale EC. Diese kann anhand der Notrufdaten effiziente Hilfsmaßnahmen einleiten. Weiterhin kann die Betriebs- und Wartungszentrale OMC die Sendung einer Kurznachricht (short message broadcast) mit Warnhinweisen an alle Mobilfunkteilnehmer, die sich in der Nähe des Unfallortes befinden, veranlassen.

In dem gezeigten Notruf-System ESYS wird auch das bereits genannte Fernsprechnetz TN zur Übertragung von Notruftelegrammen EMES genutzt. Dieses Fernsprechnetz ist z.B. ein öffentliches ISDN-fähiges Fernsprechnetz mit Notruf-Sendevorrichtungen EW, die die Notruftelegramme gemäß ISDN-Protokollen auf dem Datenkanal (D-Kanal) aussendet.

Beispielhaft sind hier zwei Notruf-Sendevorrichtungen EW dargestellt, von denen die eine in einem Tischapparat und die andere in die Basistation eines schnurlosen Telefons CT integriert ist. In zukünftigen Telekommunikationsnetzen, die nach dem UPT-Konzept ausgelegt sind, sind in den Teilnehmerendgeräten bereits Kartenleser eingebaut, die dann zum Lesen von Notrufdaten genutzt werden können. (UPT: Universal Personal Telecommunications, siehe den Artikel "Dritte Generation der Mobilkommunikation" von Dr.-Ing. H. Armbruster, 1992, Telecom Report 15,, Heft 2, Siemens AG, München, DE).

Durch Einschieben der Patienten-Chipkarte wird ein Notruf ausgelöst. Es ist auch denkbar, den Notruf durch Betätigung der Wahltastatur auszulösen, wobei mehrere Tastenkombinationen zur Verfügung stehen. Jede Tastenkombination entspricht einem logischen Schaltmittel, das jeweils die Verknüpfung des Notruftelegramms EMES mit einer vorgegebenen Kennung bewirkt. Die jeweilige Kennung bestimmt, welche Alarmfunktion, hier z.B. akustischer Alarm A, von einer der Notruf-Empfangsvorrichtungen ausgelöst wird.

In diesem Ausführungsbeispiel ist in der Nebenstellenanlage PABX, an der beide Telefone angeschlossen sind, eine Notruf-Empfangsvorrichtung R installiert, um im Notfall vor Ort einen akustischen Alarm A auszulösen. Weiterhin wird der Notruf über das Fernsprechnetz an die nächstgelegene Ortsvermittlungsstelle geleitet, an die eine Alarmzentrale EC angeschlossen ist. Die Alarmzentrale, die z.B. die örtliche Rettungsleitstelle ist, erhält die Notrufdaten EDAT, um gezielt Notdienste (Notarzt, Feuerwehr) anzufordern und um diese detalliert zu informieren.

Das Notrufsystem ESYS ermöglicht es jedermann, schnell und effizient Hilfe zu beschaffen. Durch die Nutzung des öffentlichen Fernsprechnetzes kann das Notruf-System ESYS kostengünstig und weitläufig realisiert werden.

Das in Fig. 1 dargestellte Notruf-System ESYS umfaßt weiterhin ein Energieversorgungsnetz, hier z.B. ein Straßenbeleuchtungsnetz PN, über das Notruftelegramme mittels Pulscode-Modulation übertragen werden. An das Straßenbeleuchtungsnetz PN, welches über einen NF-Übertrager mit dem Fernsprechnetz TN verbunden ist, sind drahtgebundene Notruf-Sendeeinrichtungen EW angeschlossen. Diese sind z.B. als auffällig markierte Notrufgeräte an solchen Standorten installiert, die besondere Gefahrenbereiche darstellen (Bahnhöfe, Flughäfen, Parkhäuser, Straßenkreuzungen ...). Durch Einstecken einer Speicher-Karte CC in eines der Notrufgeräte wird ein Notruf mittels Notruftelegramm abgesetzt. Neben den Notrufdaten EDAT enthält das Notruftelegramm auch die Standortkennung des benutzten Notrufgerätes EW. Der Notruf wird mit Hilfe des NF-Übertragers auf das Fernsprechnetz TN zur Vermittlung an die Alarmzentrale geleitet.

Das Straßenbeleuchtungsnetz PN enthält Notruf-Empfangsvorrichtungen R, die an ausgewählten Standorten installiert sind, um dort vorgegebene Alarmfunktionen auszulösen. In diesem Beispiel ist eine der Notruf-Empfangsvorrichtungen R, an die eine Videokamera V angeschlossen ist, in unmittelbarer Nähe eines zu observierenden Gebäudes (Bank, Botschaft) installiert. Wird ein Notruf von einer der nächstgelegenen Notruf-Sendevorrichtungen ausgelöst, so schaltet diese Notruf-Empfangsvorrichtung die Videokamera V ein. Diese sendet wiederum Bilddaten mit einer Übertragungsgeschwindigkeit von z.B. 64 Kbit an die Alarmzentrale. Dort werden aus den Bilddaten laufende Bilder zur Darstellung auf dem Monitor reproduziert.

Das in Fig. 1 dargestellte Notruf-System ESYS ist ein Ausführungsbeispiel, das die vielseitige Anwendung der Erfindung andeutet. Es sind zahlreiche Ausgestaltungen denkbar, die für bestimmte Forderungen (Transportüberwachung, Objektschutz, Werkschutz) optimiert sind. Im weiteren werden Ausführungen der drahtlosen Notruf-Sendevorrichtung beschrieben und mögliche Realisierungen der Übertragung des Notruftelegrams aufgezeigt. Beispielhaft gilt der nachfolgende Beschreibungsteil auch für die bereits genannten drahtgebundenen Notruf-Sendevorrichtungen.

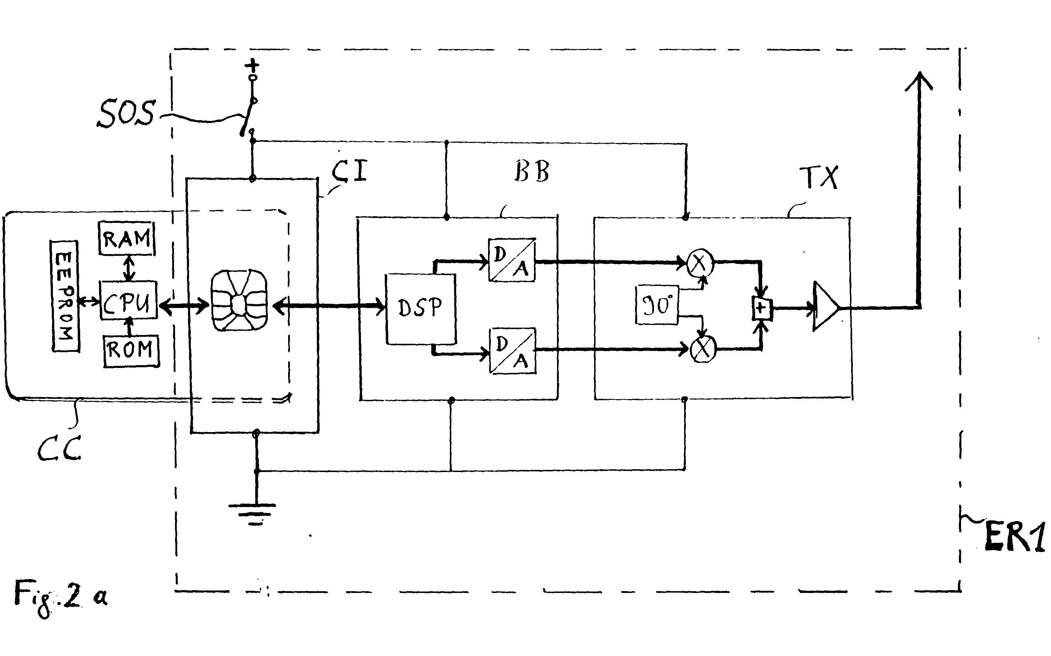

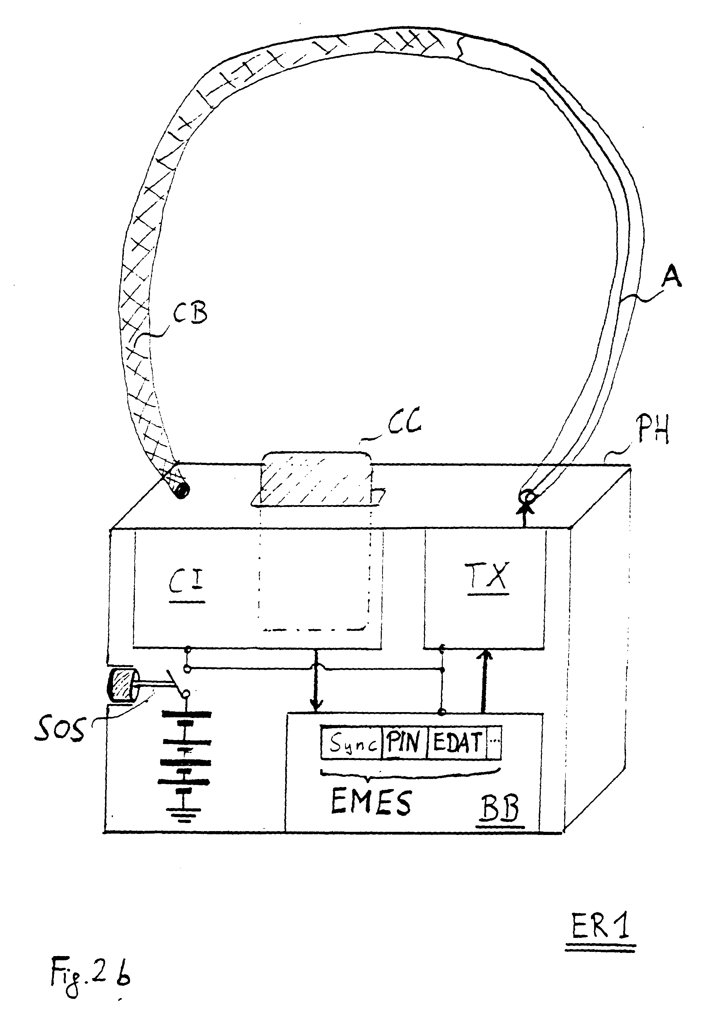

Die in Fig. 2a und b dargestellte drahtlose Notruf-Sendevorrichtung ER1, im weiteren kurz Notruf-Funkvorrichtung genannt, ist als tragbares Gerät und für den Einsatz in einem TDMA-Mobilfunknetz ausgeführt (TDMA: Time Division Multiple Access).

Nach Fig. 2a enthält die Notruf-Funkvorrichtung ER1 einen Kartenleser CI, ein diesem nachgeschaltetes Signalverarbeitungsteil BB, ein diesem nachgeschaltetes HF-Sendeteil TX und einen Alarmschalter SOS zum Schließen des Versorgungsstromkreises.

Der Kartenleser CI dient zur Annahme und zum Lesen einer Chipkarte CC, die eine zentrale Recheneinheit CPU, einen Festwertspeicher ROM, einen Arbeitsspeicher RAM und einen Datenspeicher EEPROM enthält. Der Aufbau und die Funktion einer solchen Chipkarte ist beispielsweise in dem Artikel "Rechengenie in der Plastikkarte" von Dr. T. Wille, Zeitschrift "Funkschau", 7. Ausg. 1993, Franzis-Verlag, München und in dem Artikel "Ihre Karte fürs Leben" von H.P. Kistner, Zeitschrift "Funkschau", 6. Ausg. 1993, Franzis-Verlag, München, beschrieben.

In diesem Beispiel ist der Kartenleser entsprechend dem Standard ausgeführt, der in dem ISO-Dokument # 7816-2: 1988 (E), Technical Commitee ISO/TC 97, Information Processing Systems, 1988-05-15, erste Auflage, veröffentlicht ist (ISO: International Standards Organization). Dadurch können sogenannte Patienten-Chipkarten gelesen werden, wie sie in dem obigen Artikel von H.P. Kistner beschrieben werden. Diese Patienten-Chipkarten enthalten personenbezogene und medizinische Daten über den Karteninhaber.

Die Notruf-Funkvorrichtung hat somit Zugriff auf Daten, die z.B. den Namen, die Anschrift und die Versicherungsnummer sowie die Blutgruppe und das Alter des Karteninhabers angeben. Im Notfall stehen diese Daten als sogenannte Notrufdaten zur Verfügung, die in einem Notruftelegramm ausgesendet werden können.

Zur Erstellung des Notruftelegramms und zur Erzeugung eines analogen Basisbandsignals dient die Signalverarbeitungsstufe BB, die einen digitalen Signalprozessor DSP und zwei Digital-Analog-Umsetzer enthält. Das Signalverarbeitungsteil BB ist über einen PCM-Bus mit dem Kartenleser CI verbunden und erzeugt mittels der gelesenen Notrufdaten die Quadraturkomponenten eines burstmodulierten Basisbandsignals.

Im HF-Sendeteil TX wird dieses Basisbandsignal in die HF-Lage umgesetzt, verstärkt und über eine Antenne abgestrahlt.

Die Stromversorgung der oben genannten Baugruppen wird über den Alarmschalter SOS geschlossen. Hat der Benutzer der Notruf-Funkvorrichtung ER1 seine Chipkarte in den Kartenleser CC gesteckt, so kann jederzeit durch Bestätigung des Alarmschalters SOS ein Funknotruf gesendet werden, der wichtige Notrufdaten enthält. Da die gezeigte Notruf-Funkvorrichtung aus Baugruppen aufgebaut ist, die der Fachmann kennt, wird hier auf eine detaillierte Darstellung verzichtet. Die in Fig. 2a und 2b gezeigte Notruf-Funkvorrichtung ER1 ist für den Einsatz in einem TDMA-Mobilfunksystem, insbesondere dem GSM, geeignet. Das Signalverarbeitungsteil BB, das HF-Sendeteil TX und die nicht dargestellte Gerätesteuerung entsprechen den Baugruppen einer GSM-Mobilstation, wie sie z.B. in dem Artikel "Architektur eines Mobilfunkgerätes für das Netz D" von P. Schöffel et. al. in der Zeitschrift "Philips Innovation 1/91" beschrieben ist.

Fig. 2b zeigt eine besonders praktisch zu tragende Ausführungsform der Notruf-Funkvorrichtung ER1. Dazu sind die schon genannten Baugruppen in ein tragbares Gehäuse PH eingebaut. Das tragbare Gehäuse ist mit einem Tragriemen CB versehen, in den eine Antenne A integriert ist. Dadurch kann die Notruf-Funkvorrichtung ER1 nah am Körper des Benutzers getragen werden, ohne daß die Antenne A ein räumliches Hindernis oder eine Verletzungsgefahr darstellt. Weiterhin ist der Betätigungsknopf des Alarmschalters SOS in eine Gehäusevertiefung eingelassen, um Fehlalarme zu vermeiden.

Die gezeigte Notruf-Funkvorrichtung ER1 enthält diejenigen Baugruppen, die zum Lesen von Notrufdaten EDAT und zum Senden eines Notruftelegramms EMES notwendig sind. Auf weitere Baugruppen, die nicht zur Funkübertragung des Notruftelegramms EMES benötigt werden, wie z.B. ein Audioteil und ein HF-Empfangsteil, wurde verzichtet. Dadurch kann die Notruf-Funkvorrichtung ER1 als sehr platzsparendes tragbares Gerät ausgeführt werden. Weiterhin ist innerhalb des Mobilfunknetzes keine kontinuierliche Bestimmung des Aufenthaltsortes (Location Update) erforderlich, wie bei einer 2-Wege-Funkvorrichtung. Durch Einstecken der persönlichen Patienten-Chipkarte CC ist das Gerät alarmbereit. In diesem Zustand fließt kein Versorgungsstrom, so daß die Versorgungsbatterie unbelastet bleibt. Im Notfall wird durch Betätigung des Alarmschalters SOS zunächst eine Identitätskennung PIN gelesen, die zur Identifizierung und Authentifizierung der in Not geratenen Person dient. Weiterhin wird das Lesen der persönlichen Notrufdaten EDAT, wie z.B. Name, Versicherungsnummer, Blutgruppe, Alter und Risikoanzeichen (Bluter?, Epilepsie?, Diabetes?), veranlaßt. Der Zugriff auf die Chipkarte CC erfolgt nach dem Standard, der im ISO-Dokument # 7816-3: 1988 (E) beschrieben ist.

Die gelesenen Notrufdaten werden in das Notruftelegramm EMES eingesetzt. Dieses Notruftelegramm ist z.B. wie ein TDMA-Zugriffszeitschlitz (access burst) gemäß dem GSM-Standard aufgebaut. Es enthält eine 41-Bit-Sequenz Sync zur empfangsseitigen Synchronisation und eine 36-Bit-Sequenz zur Übertragung von Informationsdaten, die anzeigen, daß ein Notruf gesendet wird und die Notrufdaten EDAT umfassen. Das Notruftelegramm EMES wird mehrmals z.B. 20 mal über einen Organisationskanal ausgesendet.

Durch die sprachlose Informationsübertragung erhält eine Rettungsleitstelle auch dann wichtige Notrufdaten, falls niemand am Notfallort in der Lage ist zu sprechen. Die Lokalisierung der Notruf-Funkvorrichtung ER1 erfolgt z.B. durch eine Messung der Empfangsfeldstärke in den Funkfeststationen des Mobilfunknetzes, d.h. durch eine Funkzellenzuordnung. Eine Kreuzpeilung mittels Peilempfänger ist auch denkbar.

Das oben beschriebene Ausführungsbeispiel betrifft eine Notruf-Funkvorrichtung für Personen, die sich im Versorgungsbereich eines GSM-Netzes aufhalten. Es ist auch denkbar die Notruf-Funkvorrichtung zum Objektschutz, wie z.B. Lagerüberwachung, Kfz-Diebstahlsicherung und Transportüberwachung einzusetzen. Dazu wären Chipkarten zu benutzen, die die gelagerten Güter, das Kfz, bzw. den Transportgegenstand näher kennzeichnen. Es ist auch denkbar, die Notruf-Funkvorrichtung mit einem Kartenleser oder Lesegerät für Magnetstreifen- oder Lochkarten, bzw. für Plug-In-Chips auszuführen.

Weiterhin ist der Einsatz der Notruf-Funkvorrichtung nicht auf Mobilfunknetze beschränkt. Die Erfindung kann für beliebige Funksysteme, in denen Daten übertragen werden können, ausgeführt werden. Beispielsweise ist eine erfindungsgemäße Ausgestaltung für den Einsatz in einem Betriebfunksystem denkbar. Dabei verfügt besonders gefährdetes Personal über tragbare Notruf-Funkvorrichtungen, die z.B. in Werkzeugtaschen integriert sind. Die Chipkarte enthält u.a. Daten, die Auskunft über Gefahrenstoffe am Arbeitsplatz geben.

Die erfindungsgemäße Notruf-Funkvorrichtung ist weiterhin in ein Funkgerät, insbesondere in ein Mobilfunkgerät, das bereits einen Kartenleser aufweist, integrierbar. Dadurch kann ein herkömmliches Funkgerät zu einem Funkgerät mit intelligenter Notruf-Funktion erweitert werden. Erfindungsgemäß wird z.B. ein GSM-Mobilfunkgerät mit intelligenter Notruf-Funktion ausgestattet, indem das Programm zur Gerätesteuerung (firmware) das Lesen der Notrufdaten von der im Kartenleser befindlichen Patienten-Chipkarte, das Erstellen des Notruftelegramm im Signalverarbeitungsteil und das Senden über einen Mobilfunkkanal veranlaßt. Dieser Mobilfunkkanal ist z.B. ein Signalierungskanal für Kurznachrichtenübertragung (short message service).

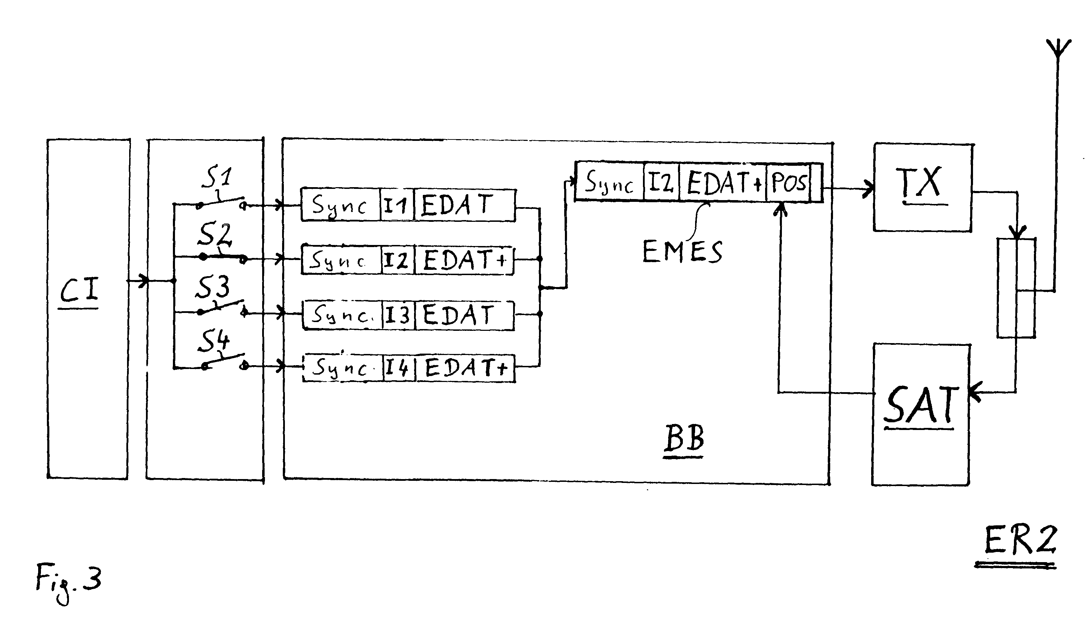

Im folgenden wird ein zweites Ausführungsbeispiel nach Fig. 3 beschrieben:

In Fig. 3 ist eine Notruf-Funkvorrichtung ER2 dargestellt, die einen Kartenleser CI, eine nachgeschaltete Auswahlstufe mit vier Schaltern S1 bis S4, ein nachgeschaltetes Signalverarbeitungsteil BB, ein nachgeschaltetes HF-Sendeteil, einen nachgeschalteten Duplexer mit einer Sende-/Empfangsantenne und einen empfangsseitig angeschlossenen Satelliten-Funkempfänger SAT enthält, dessen Datenausgang mit dem Signalverarbeitungsteil BB verbunden ist.

Im Vergleich zu der zuvor beschriebenen Ausführung nach Fig. 2, enthält das zweite Ausführungsbeispiel nach Fig.3 die Auswahlstufe und den Satelliten-Funkempfänger, mittels denen dem zu sendenden Notruftelegramm EMES eine vorgegebene Kennung I1 ... I4, bzw. ermittelte Positionsdaten POS hinzugefügt werden.

Die Auswahlstufe enthält vier Schalter S1 ... S4, die jeweils einer bestimmten Alarmkategorie zugeordnet sind. Mögliche Alarmkategorien sind etwa:
1.) "Vollalarm mit Ambulanz",
2.) "Vollalarm ohne Ambulanz",
3.) "Stiller Alarm mit Ambulanz",
4.) "Stiller Alarm ohne Ambulanz".

Hierbei bedeutet "Vollalarm", daß die alarmierten Notfalldienste (Polizei, Feuerwehr ...) beim Eintreffen am Notfallort akustische und optische Warnsignale (Sirene bzw. Blaulicht) einsetzen. Beim "Stillen Alarm" sollen diese Warnsignale nicht am Notfallort eingesetzt werden. Dies ist z.B. dann vorteilhaft, wenn der Notfall von Gewalttätern verursacht wurde, die nicht gewarnt werden sollen (Raubüberfall, Vergewaltigung, Entführung ...). Weiterhin kann im Bereich des Objektschutzes die Auslösung eines "Stillen Alarms" sinnvoll sein (Einbruch, Bankraub). Das Auslösen eines der beiden obigen Alarme kann jeweils mit einer Alarmierung des medizinischen Rettungsdienstes verknüpft sein.

Die Schalter S1 ... S4 sind mit dem Signalverarbeitungsteil BB derart verbunden, daß das Betätigen jeweils eines der Schalter das Erstellen des Notruftelegramms EMES entsprechend der gewählten Alarmkategorie bewirkt. In diesem Beispiel nach Fig. 3 ist durch Betätigung des zweiten Schalters S2 die zweite Alarmkategorie "Vollalarm mit Ambulanz" gewählt worden. Zunächst erhält das Notruftelegramm Synchronisationsdaten Sync, eine Kennung I2, die die gewählte Alarmkategorie kennzeichnet und Notrufdaten EDAT+ mit den für diese Alarmkategorie notwendigen medizinischen Daten. Bei einem Alarm ohne Ambulanz werden etwa nur personenbezogene Daten EDAT- herangezogen. Anschließend erhält das zu sendende Notruftelegramm EMES die geographischen Positionsdaten POS, die von dem Satelliten-Funkempfänger SAT geliefert werden und den monentanen Standort der Notruf-Funkvorrichtung ER2 angeben. Danach wird das Notruftelegramm EMES mittels des HF-Sendeteils TX auf einem Funkkanal, z.B. auf einem Bündelfunkkanal ausgesendet.

Je nach Auswahl der Alarmkategorie wird das Notruftelegramm EMES mit einer bestimmten Kennung und mit bestimmten Notrufdaten aufgebaut. Zum einen erfolgt dadurch eine Alarmierung der tatsächlich benötigten Sicherheits- und Rettungsdienste, zum anderen werden nur solche Notrufdaten an die Rettungsleitstelle übertragen, die dort nutzbringend ausgewertet werden können.

Alternativ zu der in Fig 3 gezeigten Ausführungsform ist auch eine Notruf-Sendevorrichtung denkbar, die über einen Kartenleser verfügt, in dem die Schalter so eingebaut sind, daß sie die Kontur der Speicherkarte abtasten. Mittels einer gemäß Anspruch 12 ausgeführten Speicherkarte, die z.B. vier unterschiedliche Kartenkonturen aufweist, wird somit durch ihre Einsteckposition die jeweilige Alarmkategorie bestimmt.

Die beschriebenen Notruf-Funkvorrichtungen ER1 und ER2 sind für den mobilen Einsatz der Erfindung innerhalb eines Funknetzes, insbesondere eines zellularen Mobilfunknetzes vorgesehen, wobei sie jeweils als Einzelgerät oder als Zusatzmodul für ein Funkgerät ausführbar sind. Es sind Ausführungen denkbar, die einen zeitweise stationären Einsatz ermöglichen, wie etwa als transportable Notrufsäulen für Autobahnbaustellen.

Aus obiger Beschreibung der drahtlosen Notruf-Sendevorrichtungen ER1 und ER2 sind auch Ausführungen der drahtgebundenen Notruf-Sendevorrichtungen EW ableitbar, da beide Notruf-Sendevorrichtungen in ihrem Funktionsprinzip gleich sind. Sie unterscheiden sich lediglich durch ihre physikalische Anbindung (drahtlos oder drahtgebunden) an das Übertragungsnetz des Notruf-Systems.

Beispielsweise enthält die drahtgebundene Notruf-Sendevorrichtung EW eine Modulationsstufe, die in dem Signalverarbeitungsteil BB integriert ist und die nach den DTMF-Übertragungsverfahren (DTMF: Dual Tone Multi Frequency) das Notruftelegramm EMES zur Übertragung in ein analoges Fernsprechnetz eingespeist.

Die beschriebenen Ausgestaltungen des Notruf-Systems sind insbesondere für den Personenschutz vorteilhaft.

Es sind zahlreiche weitere Ausführungen denkbar, darunter auch solche, die für den Güterschutz optimiert sind.

## Patentansprüche

1. Notruf-System (ESYS)
mit einem Übertragungsnetz (TN, PN; RN), das mindestens einen Nachrichtenkanal bereitstellt;
mit mindestens einer Notruf-Sendevorrichtung (EW; ER2), die geeignet ist, mittels eines Kartenlesers (CI) von einer Speicher-Karte (CC) Notrufdaten (EDAT) und eine Identitätskennung (PIN) des Notrufenden zu lesen und diese zusammen in einem Notruftelegramm (EMES) auf dem Nachrichtenkanal zu senden, und
mit mindestens einer Notruf-Empfangsvorrichtung (R), die geeignet ist, das Notruftelegramm (EMES) zu empfangen und es aus zu werter um mindestens eine Alarmfunktionen (A, V, L) auszulösen, und/oder die Notrufdaten (EDAT) an eine Alarmzentrale (EC) weiterzuleiten, die an das Übertragungsnetz (TN, PN; RN) angeschlossen ist;
**dadurch gekennzeichnet, daß** die Notruf-Sendevorrichtung (EW, ER2) ein Signalverarbeitungsteil (BB) enthält, das geeignet ist, das Notruftelegramm (EMES) mit jeweils einer Kennung (I1, I2, I3, I4) zu verknüpfen, die einer vorgegebenen Alarmkategorie entspricht und die die auszulösenden Alarmfunktionen (A, L, V) bestimmt.

2. Notrufsystem (ESYS)
nach Anspruch 1, **dadurch gekennzeichnet, daß**
das Übertragungsnetz ein elektrisches Energieversorgungsnetz (PN) mit vorgegebenen Nachrichtenkanälen ist.

3. Notruf-Sendevorrichtung (EW; ER2)
für ein Notruf-System (ESYS), das ein Übertragungsnetz (TN, PN; RN) enthält, das mindestens einen Nachrichtenkanal bereitstellt,
mit einem Kartenleser (CI), der geeignet ist, Notrufdaten (EDAT; EDAT -, EDAT +) von einer Speicher-Karte (CC) zu lesen;
mit einem Signalverarbeitungsteil (BB), das dem Kartenleser (CI) nachgeschaltet ist und das geeignet ist, ein Notruftelegramm (EMES) mittels der Notrufdaten zu erstellen, und
mit einem Sendeteil (TX), das dem Signalverarbeitungsteil (BB) nachgeschaltet ist, und das geeignet ist, das Notruftelegramm (EMES) auf dem Nachrichtenkanal auszusenden,
**dadurch gekenzeichnet, daß**
das Signalverarbeitungsteil (BB) geeignet ist, das Notruftelegramm (EMES) mit jeweils einer Kennung (I1, I2, 13, I4) zu verknüpfen, die einer vorgegebenen Alarmkategorie entspricht und die auszulösenden Alarmfunktionen (A, L, V) bestimmt.

4. Notruf-Sendevorrichtung (ER2)
nach Anspruch 3, **dadurch gekennzeichnet, daß**
die Notruf-Sendevorrichtung eine drahtlose Notruf-Sendevorrichtung (ER2) für ein drahtloses Telekommunikationsnetz (RN) mit vorgegebenen Funkkanälen, insbesondere für ein Betriebs- oder Mobilfunknetz, ist,
daß das Signalverarbeitungsteil (BB) zur Positionsbestimmung mit einem Satelliten-Funkempfänger (SAT), der geeignet ist, aktuelle Positionsdaten (POS) zu ermitteln, verbunden ist und daß
das Signalverarbeitungsteil (BB) geeignet ist, das Notruftelegramm (EMES) mit diesen Positionsdaten (POS) zu verknüpfen.

5. Notruf-Sendevorrichtung (ER2) nach Anspruch 4,
**gekennzeichnet durch** ein tragbares Gehäuse (PH), das einen Tragriemen (CB) und eine darin integrierte Antenne (A) aufweist.

6. Notruf-Sendevorrichtung (EW, ER2)
nach Anspruch 3, **dadurch gekennzeichnet, daß**
die Speicher-Karte (CC) eine Patienten-Chip-Karte ist, auf der medizinische Daten eines Patienten gespeichert sind und
daß der Kartenleser (CI) geeignet ist, die medizinischen Daten als Notrufdaten (EDAT) zur Erstellung des Notruftelegramms (EMES) zu lesen.

7. Notruf-Sendevorrichtung (EW, ER2)
nach Anspruch 3, **gekennzeichnet durch** Schaltmittel (S1, S2, S3, S4), die mit dem Signalverarbeitungsteil (BB) verbunden sind und mittels denen das Signalverarbeitungsteil geeignet ist, das Notruftelegramm (EMES) mit der jeweiligen Kennung (I1, I2, I3, I4) zu verknüpfen, die der vorgegebenen Alarmkategorie entspricht und die die auszulösenden Alarmfunktionen (A, L, V) bestimmt.

## Claims

1. Emergency call system (ESYS):
having a transmission network (TN, PN; RN) which provides at least one message channel;
having at least one emergency call transmission device (EW; ER2) which is suitable for reading emergency call data (EDAT) and an identity identification (PIN) of the emergency caller from a memory card (CC) by means of a card reader (CI), and for sending these together in an emergency call message (EMES) on the message channel, and
having at least one emergency call reception device (R), which is suitable for receiving and evaluating the emergency call message (EMES), in order to trigger at least one alarm function (A, V, L), and/or for forwarding the emergency call data (EDAT) to an alarm centre (EC), which is connected to the transmission network (TN, PN; RN);
**characterised in that** the emergency call transmission device (EW, ER2) contains a signal-processing part (BB), which is suitable for linking the emergency call message (EMES) to a respective identification (I1, I2, I3, I4), which corresponds to a predefined alarm category and which determines the alarm functions (A, L, V) to be triggered.

2. Emergency call system (ESYS)
according to Claim 1, **characterised in that** the transmission network is an electrical power-supply network (PN) having predefined message channels.

3. Emergency call transmission device (EW; ER2)
for an emergency call system (ESYS), which contains a transmission network (TN, PN; RN) which provides at least one message channel;
having a card reader (CI) which is suitable for reading emergency call data (EDAT; EDAT-, EDAT+) from a memory card (CC);
having a signal-processing part (BB), which is arranged downstream of the card reader (Cl) and is suitable for creating an emergency call message (EMES) by means of the emergency call data, and
having a transmission part (TX), which is arranged downstream of the signal-processing part (BB) and is suitable for transmitting the emergency call message (EMES) on the message channel,
**characterised in that**
the signal-processing part (BB) is suitable for linking the emergency call message (EMES) to a respective identification (I1, I2, I3, I4), which corresponds to a predefined alarm category and which determines the alarm functions (A, L, V) to be triggered.

4. Emergency call transmission device (ER2)
according to Claim 3, **characterised in that** the emergency call transmission device is a wireless emergency call transmission device (ER2) for a wireless telecommunications network (RN) having predefined radio channels, in particular for a service or mobile radio system,
**in that** the signal-processing part (BB) is connected for position determination to a satellite radio receiver (SAT), which is suitable for determining the current position data (POS), and **in that**
the signal-processing part (BB) is suitable for linking the emergency call message (EMES) to these position data (POS).

5. Emergency call transmission device (ER2) according to Claim 4, **characterised by** a portable housing (PH) which has a carrying frame (CB) and an antenna (A) integrated therein.

6. Emergency call transmission device (EW, ER2)
according to Claim 3, **characterised in that** the memory card (CC) is a patient chip card on which a patient's medical data are stored, and **in that** the card reader (CI) is suitable for reading the medical data as emergency call data (EDAT) in order to create the emergency call message (EMES).

7. Emergency call transmission device (EW, ER2)
according to Claim 3, **characterised by** switching means (S1, S2, S3, S4), which are connected to the signal-processing part (BB) and by means of which the signal-processing part is suitable for linking the emergency call message (EMES) to the respective identification (I1, I2, I3, I4), which corresponds to the predefined alarm category and which determines the alarm functions (A, L, V) to be triggered.

## Revendications

1. Système d'appel de secours (ESYS) avec un réseau de transmission (TN, PN; RN) qui met à disposition au moins un canal de messagerie; avec au moins un dispositif d'émission d'appel de secours (EW; ER2) qui est capable, au moyen d'un lecteur de cartes (CI), d'extraire d'une carte mémoire (CC) des données d'appel de secours (EDAT) et un numéro d'identification (PIN) de la personne appelant au secours et de les envoyer ensemble dans un télégramme d'appel de secours (EMES) sur le canal de messagerie, et avec au moins un dispositif de réception d'appel de secours (R) qui est capable de recevoir le télégramme d'appel de secours (EMES) et de l'interpréter afin de déclencher au moins une fonction d'alarme (A, V, L) et/ou de transférer les données d'appel de secours (EDAT) à un centre d'alarme (EC) qui est connecté au réseau de transmission (TN, PN; RN); **caractérisé en ce que** le dispositif d'émission d'appel de secours (EW, ER2) contient une partie de traitement de signal (BB) qui est capable d'associer le télégramme d'appel de secours (EMES) à respectivement une identification (I1, I2, I3, I4) correspondant à une catégorie d'alarme prédéterminée et déterminant les fonctions d'alarme (A, L, V) à déclencher.

2. Système d'appel de secours (ESYS) selon la revendication 1, **caractérisé en ce que** le réseau de transmission est un réseau d'alimentation en énergie électrique (PN) avec des canaux de messagerie prédéterminés.

3. Dispositif d'émission d'appel de secours (EW; ER2) pour un système d'appel de secours (ESYS) contenant un réseau de transmission (TN, PN; RN) qui met à disposition au moins un canal de messagerie, avec un lecteur de cartes (CI) capable d'extraire des données d'appel de secours (EDAT; EDAT-, EDAT+) d'une carte mémoire (CC), avec une partie de traitement de signal (BB) placée en aval du lecteur de cartes (CI) et capable de créer un télégramme d'appel de secours (EMES) au moyen des données d'appel de secours, et avec une partie d'émission (TX) placée en aval de la partie de traitement de signal (BB) et capable d'émettre le télégramme d'appel de secours (EMES) sur le canal de messagerie, **caractérisé en ce que** la partie de traitement de signal (BB) est capable d'associer le télégramme d'appel de secours (EMES) à respectivement une identification (I1, I2, I3, I4) correspondant à une catégorie d'alarme prédéterminée et déterminant les fonctions d'alarme (A, L, V) à déclencher.

4. Dispositif d'émission d'appel de secours (ER2) selon la revendication 3, **caractérisé en ce que** le dispositif d'émission d'appel de secours est un dispositif d'émission d'appel de secours sans fil (ER2) pour un réseau de télécommunication sans fil (RN) avec des canaux radiotéléphoniques prédéterminés, en particulier pour un réseau radiotéléphonique de service ou mobile, **en ce que** la partie de traitement de signal (BB), pour déterminer la position avec un récepteur radio par satellite (SAT), est capable de déterminer les données de position (POS) actuelles, et **en ce que** la partie de traitement de signal (BB) est capable d'associer le télégramme d'appel de secours (EMES) à ces données de position (POS).

5. Dispositif d'émission d'appel de secours (ER2) selon la revendication 4, **caractérisé par** un boîtier portable (PH) qui présente une bandoulière (CB) et une antenne (A) qui y est intégrée.

6. Dispositif d'émission d'appel de secours (EW, ER2) selon la revendication 3, **caractérisé en ce que** la carte mémoire (CC) est une carte à puce d'assurance maladie sur laquelle sont mémorisées des données médicales d'un patient, et **en ce que** le lecteur de cartes (CI) est capable d'extraire les données médicales sous forme de données d'appel de secours (EDAT) en vue de la création du télégramme d'appel de secours (EMES).

7. Dispositif d'émission d'appel de secours (EW, ER2) selon la revendication 3, **caractérisé par** des moyens de commutation (SI, S2, S3, S4) qui sont associés à la partie de traitement de signal (BB) et au moyen desquels la partie de traitement de signal est capable d'associer le télégramme d'appel de secours (EMES) à l'identification respective (I1, I2, I3, I4) correspondant à la catégorie d'alarme prédéterminée et déterminant les fonctions d'alarme (A, L, V) à déclencher.
